# EUROPÄISCHE PATENTSCHRIFT

(11) **EP 1 048 221 B1**
(45) Veröffentlichungstag und Bekanntmachung des Hinweises auf die Patenterteilung: **12.01.2005**
(21) Anmeldenummer: 00107814.6
(22) Anmeldetag: 12.04.2000
(51) Int. Cl.: A23G 3/02, A23G 3/20, A23G 3/12, B29C 43/08, B29C 47/12, B29C 33/36

(54) **Prägekette zur Herstellung von Bonbons**
Embossing chain for the manufacture of confectionery
Chaîne d'estampage pour la fabrication de confiseries

(30) Priorität: 24.04.1999 DE 19918740
(43) Veröffentlichungstag der Anmeldung: 02.11.2000
(73) Patentinhaber: Klöckner Hänsel Processing GmbH, 30163 Hannover (DE)
(72) Erfinder: Markwardt, Klaus, 30880 Laatzen (DE); Lippardt, Sven, 38102 Braunschweig (DE); Hesse, Werner, 30175 Hannover (DE)
(74) Vertreter: Patentanwälte Rehberg + Hüppe

(56) Entgegenhaltungen:
- EP-A- 0 352 233
- EP-A- 0 750 978

## Beschreibung

Die Erfindung betrifft eine Prägekette zur Herstellung von Bonbons, mit einer Anzahl Kettenglieder, die abwechselnd innenund außenliegende Wangen aufweisen und jeweils eine Schneidkante besitzen, mit einer Anzahl Führungsgehäusen rechts und links einer gemeinsamen Längsmittelebene der Prägekette, die jeweils mindestens einen Prägestempel tragen, und mit Wellen, die die Kettenglieder untereinander und mit den Führungsgehäusen verbinden. Solche Prägeketten werden im Rahmen einer Prägemaschine benötigt, mit der aus einem Strang Bonbonmasse einzelne Bonbons abgeteilt und in der vorgesehenen Form geprägt werden. Die Prägekette als wesentlicher Bestandteil der Prägemaschine kann zur Herstellung von harten und/oder weichen Bonbons, auch in gefüllter Ausführung, beispielsweise auch als Kaubonbons, eingesetzt werden. Die Prägekette besteht genau genommen aus einer endlosen Oberkette und einer endlosen Unterkette, die zusammenarbeiten und so jeweils Prägekammern für die herzustellenden Bonbons bilden. Die Prägekammern werden einerseits durch Kettenglieder der Oberkette und andererseits durch Kettenglieder der Unterkette begrenzt. Zusätzlich sind noch Prägestempel rechts und links einer gemeinsamen Längsmittelebene der Prägekette und der Prägemaschine vorgesehen, die die Prägekammern mitbegrenzen. Die Prägestempel sind nur entweder an der Oberkette oder der Unterkette vorgesehen. Insbesondere sind die Prägestempel an der Oberkette vorgesehen, so daß ihre ordnungsgemäße Funktion leichter eingesehen und überwacht werden kann. Die vorliegende Erfindung beschäftigt sich mit dem Teil der Prägekette, also insbesondere der Oberkette, die die Prägestempel trägt.

Eine Prägekette der eingangs beschriebenen Art ist aus der EP 0 352 233 B1 bekannt. Die Prägemaschine weist einen Rahmen auf, an dem über horizontal ausgerichtete Antriebswellen und Umlenkwellen die endlose Oberkette einerseits und die endlose Unterkette andererseits angetrieben und geführt sind. Die die Prägestempel tragende Oberkette besitzt zunächst zwei Arten von Kettengliedern, die abwechselnd angeordnet sind. Die eine Art Kettenglieder besitzt innenliegende Wangen, also Wangen, die einen vergleichsweise geringen Abstand zu der vertikalen Längsmittelebene der Prägemaschine und damit der Prägekette aufweisen. Die andere Art Kettenglieder besitzt außenliegende Wangen, die also voneinander einen größeren Abstand besitzen und gleichsam die innenliegenden Wangen der jeweils benachbarten Kettenglieder einschließen. Jedes Kettenglied der beiden genannten Arten weist eine Schneidkante auf, die etwa im Mittelbereich jedes Kettengliedes angeordnet ist und sich quer zu der Laufrichtung der Prägekette und damit quer zu der vertikalen Längsmittelebene erstreckt. Nach vorne und hinten schließt sich an die Schneidkante jedes Kettengliedes ein Viertel einer hohlen Vertiefung an. Vier solche Viertel Vertiefungen legen den Querschnitt der Prägekammer fest, wobei ein jeder solcher Querschnitt einer Prägekammer von zwei benachbarten Kettengliedern der Oberkette und zwei benachbarten zugehörigen Kettengliedern der Unterkette gebildet werden. Rechts und links der Längsmittelebene sind in spiegelsymmetrischer Ausbildung Führungsgehäuse vorgesehen, die im wesentlichen U-förmige Gestalt besitzen. In jedem Führungsgehäuse rechts und links der gemeinsamen Längsmittelebene der Prägekette ist jeweils ein Prägestempel verschieblich geführt, der normal zu der vertikalen Längsmittelebene beweglich angeordnet ist. Jeder Prägestempel besitzt einen Schaft, der in zwei Schenkeln mit entsprechenden Durchbrechungen des jeweiligen Führungsgehäuses verschieblich gelagert ist. An den nach innen gekehrten Enden der Prägestempel sind Prägeköpfe gebildet, die in Verbindung mit den Kettengliedern die jeweilige Prägekammer begrenzen. An den nach außen gekehrten Enden jedes Schaftes eines jeden Prägestempels befinden sich Rollen, so daß die axiale Bewegung der Prägestempel in die geschlossene Stellung hinein über Führungsschienen an der Prägemaschine herbeigeführt wird, die die Prägestempel unter Anwendung von Rollreibung betätigen. In den Schäften der Prägestempel sind radial abstehende Fortsätze verankert, die unter Gleitreibung mit anderen Führungsschienen der Prägemaschine zusammenarbeiten, um die Prägekammer zu öffnen. Jedes Führungsgehäuse der Oberkette ist mit den Kettengliedern über zwei benachbarte Wellen jeweils gelenkig verbunden. Auch zwischen Welle und Führungsgehäuse besteht eine gelenkige Verbindung. Schließlich ist jedes Führungsgehäuse ein zweites Mal über eine benachbarte Welle gelenkig mit dem Kettenglied verbunden. Eine solche Oberkette weist eine Anzahl Kettenglieder auf, zu der die gleiche Anzahl Wellen und die doppelte Anzahl Führungsgehäuse sowie die doppelte Anzahl Prägestempel gehören. Aufgrund der großen Anzahl der gelenkigen Verbindungen untereinander ist die Führung der Prägestempel mit relativ großem Spiel behaftet. Es addiert sich das Spiel in jeder der gelenkigen Verbindungen zu einem Gesamtspiel auf. Das erste Spiel wird durch eine gelenkige Verbindung zwischen dem Schaft des Prägestempels und dem Führungsgehäuse bestimmt. Hinzu kommt das Spiel zwischen dem Führungsgehäuse und der Welle. Das dritte Spiel wird durch die gelenkige Verbindung zwischen Welle und Kettenglied bemessen. Demzufolge sind die Prägestempel mit ihren Achsen relativ zu den Prägekammern nur mit begrenzter Genauigkeit gelagert und bewegbar. Diese begrenzte Genauigkeit äußert sich in sogenannten Flügeln oder Graten von Bonbonmasse an dem geprägten Bonbon. Hinzu kommt, daß in den zahlreichen gelenkigen Verbindungen beim Umlauf der Prägekette Verschleiß entsteht, der die Genauigkeit der Führung und Lagerung der Prägestempel nachteilig beeinflußt. Eine solche Prägekette besitzt nur eine bestimmte nutzbare Lebensdauer. Übersteigt der Verschleiß ein gewisses Maß, leidet die Genauigkeit der zu prägenden Bonbons, und die Flügel und Grate werden größer und sind schließlich nicht mehr tolerierbar. Das beschriebene nachteilige Spiel bezieht sich jedoch nicht nur auf die Lagerung und Führung der Prägestempel zueinander, sondern auch auf die gelenkige Anordnung der Kettenglieder. Jedes Kettenglied ist an zwei benachbarten Wellen über insgesamt vier Gelenke gelenkig gelagert. Auch dort ist - wie bei jeder gelenkigen Verbindung - Spiel erforderlich, welches sich durch Verschleiß vergrößert. Diese zahlreichen, aber funktionsnotwendigen Spiele beeinträchtigen die Genauigkeit des Prägevorgangs, erbringen an jeder gelenkigen Verbindung Verschleiß und begrenzen insgesamt die Leistung der Prägekette und deren Lebensdauer. Der beschriebene Verschleiß ist besonders bedeutsam, weil die beschriebenen gelenkigen Verbindungen als gleitreibungsbehaftete Gelenke ausgebildet sind, die ohne Gleitmittel betrieben werden und bei denen es sich nicht verhindern läßt, daß staubförmige Zuckerbestandteile zwischen die gepaarten Flächen eindringen und dort eine erhebliche abrasive Wirkung erbringen, die der Lebensdauer der Prägekette abträglich ist. Die bekannte Prägekette besitzt somit nur eine begrenzte Lebensdauer und läßt auch nur eine begrenzte Geschwindigkeit, mit der die Prägekette umlaufend angetrieben wird, zu, so daß die Leistung einer solchen Prägemaschine insgesamt entsprechend begrenzt ist.

Es ist bereits bekannt, die Anzahl der Führungsgehäuse relativ zu der Anzahl der Kettenglieder und der Wellen zu halbieren, so daß zwei benachbarten Wellen an ein und demselben Führungsgehäuse angreifen. Anders gesagt, trägt jedes Führungsgehäuse zwei Prägestempel. Damit wird zwar die Anzahl der insgesamt vorhandenen gelenkigen Verbindungen reduziert. Diese Reduzierung hat jedoch keinen Einfluß auf die Genauigkeit der Führung der Prägestempel an den Prägekammern, weil die beiden an je einem Führungsgehäuse zusammengefaßten Prägestempel in zwei benachbarten und damit in unterschiedlichen Prägekammern arbeiten. Der Genauigkeit der Reproduzierbarkeit, mit der ein Bonbon geprägt wird, kommt dies nicht zugute. Außerdem trägt die Vielzahl der Gelenke in nachteiliger Weise dazu bei, daß bei Gebrauch eine Längung der Prägekette eintritt.

Der Erfindung liegt die Aufgabe zugrunde, eine Prägekette der eingangs beschriebenen Art bereitzustellen, die eine vergleichsweise erhöhte Lebensdauer hat und auch eine Leistungssteigerung der Prägemaschine ermöglicht.

Erfindungsgemäß wird dies bei einer Prägekette der eingangs beschriebenen Art dadurch erreicht, daß zumindest jedes zweite Kettenglied und eine zugehörige Welle sowie ein zugehöriges Führungsgehäuse zu einer spielfreien und in sich festen Einheit verbunden sind.

Die Erfindung geht von dem Gedanken aus, die Anzahl der gelenkigen Verbindungen zu verkleinern, um so einerseits den Verschleiß zu reduzieren und andererseits die Prägegenauigkeit zu verbessern. So wird zumindest jedes zweite Kettenglied und eine zugehörige Welle sowie ein zugehöriges Führungsgehäuse spielfrei zu einer festen, in sich unbeweglichen Einheit verbunden. Die genannten Elemente sind gegeneinander nicht mehr verschwenkbar. Die genannten Elemente bilden einen sich nur insgesamt bewegenden Körper. Sie könnten zumindest theoretisch auch einstückig ausgebildet sein. Aus Gründen der leichteren Herstellbarkeit und der Montier- und Demontierbarkeit sind das Kettenglied, die zugehörige Welle und das zugehörige Führungsgehäuse zusammengefügt, so daß zwischen diesen Teilen keine Reibung und damit auch kein Verschleiß auftreten kann. Während bisher zwischen dem Kettenglied und der Welle eine erste gelenkige Verbindung und zwischen der Welle und dem Führungsgehäuse eine zweite gelenkige Verbindung vorgesehen ist, entfallen diese beiden Gelenkstellen. Die Prägestempel müssen nach wie vor in den Führungsgehäusen verschieblich gelagert sein. Durch den Wegfall der beiden genannten gelenkigen Verbindungen wird die Führungsgenauigkeit der Prägestempel relativ zu dem Kettenglied erheblich erhöht. Die Qualität der geprägten Bonbons wird gesteigert. Flügelbildung wird vermieden. Die Bonbons erhalten eine höhere Maßhaltigkeit. Durch die Reduzierung der spielbehafteten Gelenkstellen erhöht sich die Lebensdauer der Prägekette. Es tritt eine Verschleißminderung auf, die auch mit einer Geräuschminderung einhergeht. Es können Arbeitsgeschwindigkeiten der Prägekette bis etwa 200 m/min erreicht werden, während bisher die Grenze etwa bei 100 - 120 m/min lag. Ein weiterer Vorteil gegenüber der bisher bekannten Prägekette besteht darin, daß durch die Zusammenfassung der genannten Elemente zu einer Einheit die Anordnung von Abstandshülsen zwischen den Kettengliedern mit den außenliegenden Wangen und dem Führungsgehäuse in Fortfall kommt. Dies ergibt nicht nur eine Gewichtsersparnis, sondern erlaubt gleichzeitig eine kompaktere Bauweise der Prägekette. Die Erfindung läßt sich bei Prägeketten anwenden, bei denen die Anzahl der Führungsgehäuse doppelt so groß ist wie die Anzahl der Kettenglieder, bei denen also jeweils ein Prägestempel in einem Führungsgehäuse gleitend verschiebbar gelagert ist. Die Erfindung läßt sich aber auch für solche Prägeketten einsetzen, bei denen die Anzahl der Führungsgehäuse und die Anzahl der Kettenglieder übereinstimmt, bei denen also in jedem Führungsgehäuse zwei Prägestempel benachbarter Prägekammern verschiebbar gelagert sind. Die Ausrichtung der beiden Prägestempel einer Prägekammer rechts und links der vertikalen Längsmittelebene der Prägekette zueinander ist durch die Zusammenfassung der genannten Elemente zu einer festen Einheit verbessert. Die Beweglichkeit der Kettenglieder mit den außenliegenden Wangen relativ zu den Wellen ist beseitigt. Lediglich die Kettenglieder mit den innenliegenden Wangen sind gegenüber den Wellen schwenkbar. Es versteht sich, daß der bei der Umlenkung einer Prägekette zu durchschwenkende Winkel und damit die Relativbewegung vergrößert ist. Der Verschleiß wächst jedoch nicht proportional zu diesem Winkel, sondern es ist in erster Linie der bei jeder Umlenkung zu überwindende Losbrechwiderstand in den gelenkigen Verbindungen, der sich leistungsmindernd und reibungserhöhend auswirkt.

Insbesondere sind die beiden Führungsgehäuse rechts und links der gemeinsamen Längsmittelebene der Kettenglieder über die zugehörige Welle fest miteinander verbunden. Damit wird eine in sich steife Einheit quer zur Längsmittelebene geschaffen, die gleichsam über die Breite der Prägekette durchgeht, so daß eine symmetrische Ausbildung zur Längsmittelebene resultiert. Im Stand der Technik werden Wellen eingesetzt, die nicht toleranzmäßig bearbeitet sind. Dies ist auch zur Bildung der zahlreichen Gelenkstellen nicht erforderlich. Freilich wird dabei in Kauf genommen, daß sich in den einzelnen Gelenkstellen unterschiedliche Spiele ausbilden. Dies wirkt sich leistungsmindernd und in einer Reduzierung der Lebensdauer aus. Bei der erfindungsgemäßen Prägekette werden dagegen Wellen eingesetzt, deren Durchmesser toleranzmäßig bearbeitet ist, und zwar in Abstimmung auf die Bohrungen in den Kettengliedern und in den Führungsgehäusen.

In einer besonders vorteilhaften Ausführungsform ist jedes zweite Kettenglied mit zwei zugehörigen Wellen und einem gemeinsamen, zwei Prägestempel tragenden Führungsgehäuse zu einer spielfreien und in sich festen Einheit verbunden. Die Führungsgehäuse sind dabei gleichsam an die Wangen der Kettenglieder mit den außenliegenden Wangen angeflanscht. Die beiden Führungsgehäuse rechts und links der Längsmittelebene dienen zur Lagerung je zweier Prägestempel. Sie sind relativ zu dem gemeinsamen Kettenglied noch über zwei Wellen verbunden und damit gegeneinander ausgerichtet. Dies verbessert die Genauigkeit der Prägung und damit die Maßhaltigkeit der Bonbons.

Für die Zusammenfügung der genannten Elemente zu einer spielfreien festen Einheit bestehen verschiedene Möglichkeiten. Eine einfache Realisierungsmöglichkeit besteht darin, daß das Kettenglied, die Wellen und das Führungsgehäuse unter Anwendung von Preßpassungen zu der unbeweglichen, aber lösbaren Einheit verbunden sind. Die feste unbewegliche Einheit muß wieder lösbar sein, um beispielsweise die Prägekette montieren und demontieren zu können. Auch der Austausch einzelner Elemente kann in bestimmten Fällen sinnvoll sein oder werden. Bei der Anwendung von Preßpassungen besteht ein Übermaß zwischen dem Außendurchmesser der Wellen und dem Durchmesser der Bohrungen in den Elementen, die zu der festen Einheit verbunden werden sollen. Die Teile lassen sich durch entsprechende Druckanwendung senkrecht zur vertikalen Längsmittelebene zusammenfügen.

Eine andere vorteilhafte Realisierungsmöglichkeit der festen Einheit besteht darin, daß das Führungsgehäuse einerseits und das Kettenglied andererseits auf beiden Seiten rechts und links der gemeinsamen Längsmittelebene je zwei von zwei benachbarten Wellen durchsetzte Bohrungen aufweisen, wobei auf jeder Seite rechts und links die Achsen der beiden Bohrungen in dem Kettenglied zu den Achsen der beiden Bohrungen in dem Führungsgehäuse gegeneinander so versetzt angeordnet sind, daß beim Zusammenbau der Einheit Reibschluß entsteht. Dabei verspannen sich die beiden Wellen in den Bohrungen des Führungsgehäuses und in den Bohrungen der Kettenglieder mit den außenliegenden Wangen gegenseitig. Der erzielbare Reibschluß, der die feste Einheit zusammenhält, ist von dem Maß des gegenseitigen Versatzes der Achsen abhängig. Bei dieser Ausführungsform kann das Führungsgehäuse einerseits und das Kettenglied andererseits auf beiden Seiten rechts und links der gemeinsamen Längsmittelebene je mit einer zusätzlichen Schraube verbunden sein. Diese Schraube hat mehrere Funktionen. Sie dient einerseits dem erleichterten Zusammenfügen der Teile, indem es mit dieser Schraube möglich ist, die Annäherung der Führungsgehäuse zu den außenliegenden Wangen insbesondere im letzten Teil der Bewegung herbeizuführen, in welchem sich der Versatz der Achsen unter Entstehen des Reibschlusses und einer entsprechenden Klemmkraft bemerkbar macht. Zusätzlich stellt die Schraube die Flanschverbindung zwischen dem Führungsgehäuse und der außenliegenden Wange des betreffenden Kettengliedes sicher, so daß das Führungsgehäuse auch im Betrieb bei auftretenden Schwingungen und Stößen relativ zur Welle nicht nach außen wandern kann.

Nur die Kettenglieder mit den außenliegenden Wangen sind mit dem Führungsgehäuse und den beiden Wellen zu der festen Einheit verbunden. Die Kettenglieder mit den innenliegenden Wangen sind gegenüber den Wellen beweglich, d. h. hier ist die gelenkige Verbindung beibehalten. Auf diese Art und Weise sind zwei in der Richtung der Prägekette aufeinander folgende Kettenglieder gegeneinander beweglich, wie es Sinn einer Kette ist. Gegenüber einer Welle ist hier allerdings nur noch je ein Kettenglied gelenkig verbunden, während bisher im Stand der Technik an jeder Welle zwei Kettenglieder auch gegeneinander schwenkbeweglich waren.

Es besteht die Möglichkeit, daß die innenliegenden Wangen der einen Art Kettenglieder breiter als die außenliegenden Wangen der anderen Art Kettenglieder ausgebildet sind. Da die gelenkigen Verbindungen nur an der einen Art Kettenglieder mit den innenliegenden Wangen verwirklicht sind, kann hier die Breite der Wangen zur Reduzierung der Flächenpressung sinnvoll gesteigert werden. Auch dies erhöht die Lebensdauer der Prägekette. Es sind dann die eine Art Kettenglieder mit den innenliegenden Wangen mit zwei benachbarten Wellen jeweils gelenkig verbunden.

Weiterhin besteht die Möglichkeit, daß die zwei benachbarten Wellen zusätzlich zu ihrer gelenkigen Verbindung über die eine Art Kettenglieder mit den innenliegenden Wangen über Gelenklaschen verbunden sind, die parallel zu den Kettenglieder mit den innenliegenden Wangen vorgesehen und in den äußeren Bereichen der Führungsgehäuse angeordnet sind. Auch dies ist eine sehr sinnvolle Maßnahme zur Erhöhung der Lebensdauer der Prägekette. Die Gelenklaschen ergänzen die eine Art Kettenglieder mit den innenliegenden Wangen, so daß die aufeinander folgenden Führungsgehäuse rechts und links der Längsmittelebene auf breiter Basis gegeneinander gelenkig verbunden sind.

Die Erfindung wird anhand eines bevorzugten Ausführungsbeispiels der Prägekette weiter verdeutlicht und beschrieben. Es zeigen:
- Fig. 1: einen Vertikalschnitt durch die wesentlichen Elemente der Prägekette,
- Fig. 2: eine Ansicht auf die Oberkette von unten, teilweise geschnitten,
- Fig. 3: eine Seitenansicht eines Kettengliedes mit außenliegenden Wangen, und
- Fig. 4: eine Relativdarstellung des Kettengliedes mit außenliegenden Wangen relativ zum Führungsgehäuse.

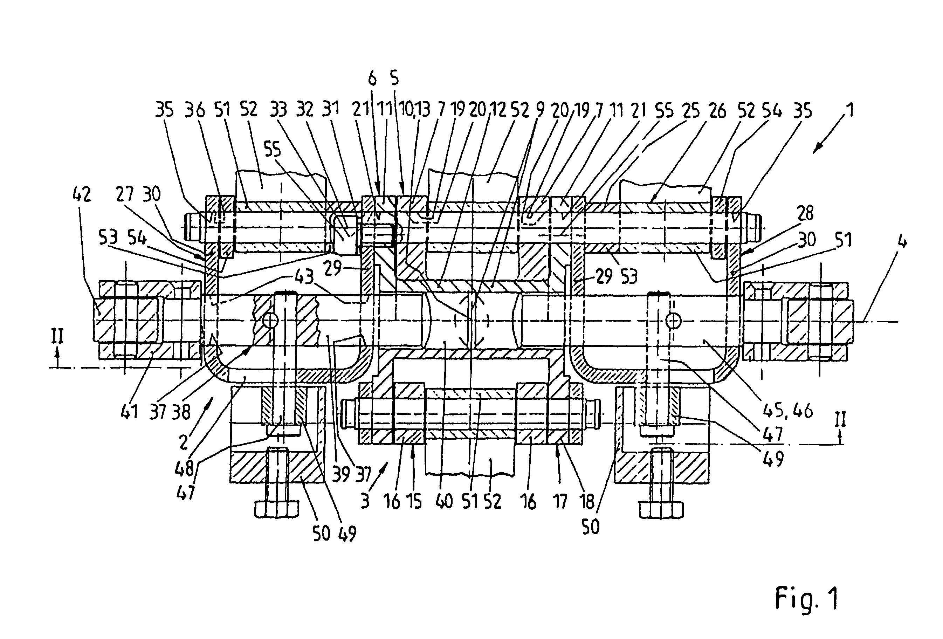

In Fig. 1 sind die für das Verständnis der Erfindung wesentlichen Teile einer Prägekette 1 angedeutet. Wie an sich bekannt, weist die Prägekette 1 eine Oberkette 2 und eine Unterkette 3 auf, die entsprechend zusammenarbeiten. Die Oberkette 2 und die Unterkette 3 arbeiten in einer Horizontalebene 4 zusammen, die sich senkrecht zur Zeichenebene der Fig. 1 erstreckt. Die Oberkette 2 ist in der Regel oberhalb der Horizontalebene 4 angeordnet und ragt nur mit einigen Teilen unterhalb die Horizontalebene 4. Die Unterkette 3 ist gänzlich unterhalb der Horizontalebene 4 angeordnet. Es versteht sich, daß auch eine vertauschte Anordnung von Oberkette 2 und Unterkette 3 an einer Prägemaschine vorgesehen sein könnte. Oberkette 2 und Unterkette 3 sind jeweils als endlose Kette ausgebildet und über miteinander getrieblich verbundene Antriebsräder angetrieben sowie über Umlenkräder geführt (nicht dargestellt). Bei ihrem Umlauf bewegt sich die Prägekette 1 mit der Oberkette 2 und der Unterkette 3 senkrecht zur Zeichenebene der Fig. 1.

Die Erfindung ist hier an der Oberkette 2 verwirklicht, während die Unterkette 3 nur zur Verdeutlichung dargestellt ist. Die Oberkette 2 baut auf Kettengliedern 5 und 6 auf. Die Kettenglieder 5 und 6 sind immer abwechselnd über die Länge der Oberkette 2 vorgesehen. Die Kettenglieder 5 weisen zwei innenliegende Wangen 7 auf. Das Kettenglied 5 mit seinen innenliegenden Wangen 7 ist spiegelsymmetrisch zu einer vertikalen Längsmittelebene 8 der Prägekette 1 ausgebildet. Die beiden innenliegenden Wangen 7 jedes Kettengliedes 5 sind über einen Steg 9 miteinander verbunden, der eine Schneidkante 10 besitzt, der in die Horizontalebene 4 einragt.

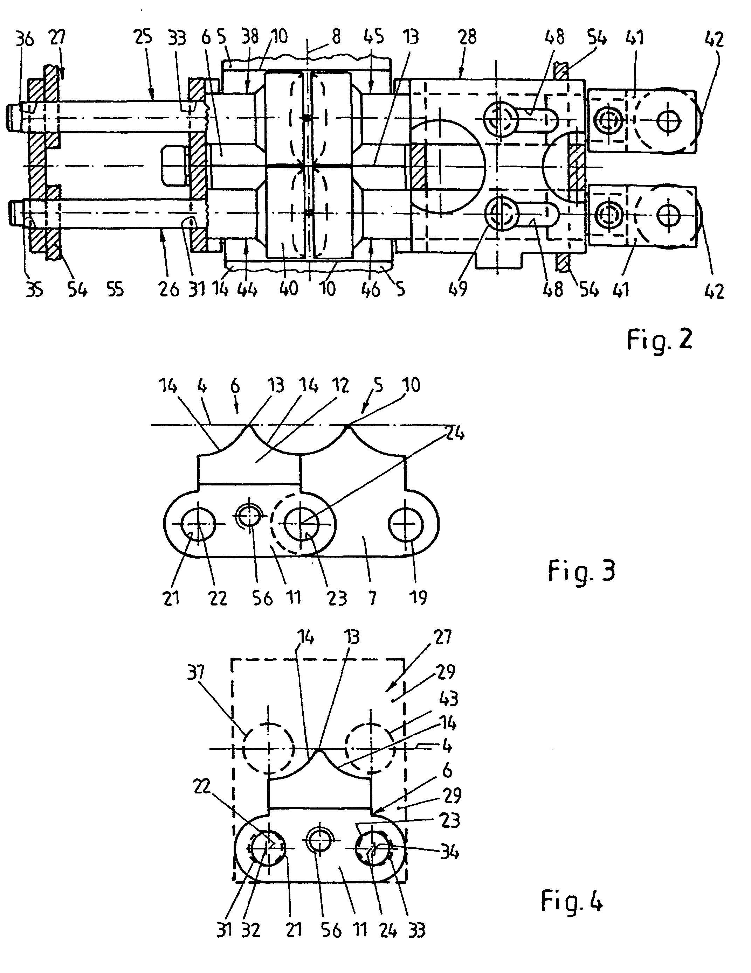

Jedes Kettenglied 6 weist zwei außenliegende Wangen 11 auf, die ebenfalls symmetrisch zu der Längsmittelebene 8 ausgebildet und angeordnet sind. Auch die außenliegenden Wangen 11 sind jeweils über einen Steg 12 (Fig. 3) brückenartig miteinander verbunden. Auch der Steg 12 endet in einer Schneidkante 13 in der Horizontalebene 4. Ansonsten ist rechts und links jeder Schneidkante 13 jedes Kettengliedes 6 je eine Viertelumfangsfläche 14 gebildet. Die beiden in Fig. 3 dargestellten Viertelumfangsflächen 14 gehören zu benachbarten, also zu unterschiedlichen Prägeräumen. Auch die Kettenglieder 5 mit den innenliegenden Wangen 7 sind umrißmäßig übereinstimmend zu den Kettengliedern 6 mit außenliegenden Wangen 11 (Fig. 3) ausgebildet, so daß auch dort entsprechende Viertelumfangsflächen im Anschluß an die Schneidkante 10 vorgesehen sind. Auch die Unterkette 3 weist Kettenglieder 15 mit innenliegenden Wangen 16 auf. Entsprechend besitzt die Unterkette 3 auch Kettenglieder 17 mit außenliegenden Wangen 18. Auch die Kettenglieder 15 und 17 sind ähnlich wie die Kettenglieder 5 und 6 der Oberkette ausgebildet, d. h. sie besitzen Stege, die in entsprechenden Schneidkanten enden. Rechts und links der Stege sind auch dort Viertelumfangsflächen verwirklicht. Es ist leicht vorstellbar, daß ein Prägeraum für die Herstellung eines Bonbons damit umfangsmäßig von den vier Viertelumfangsflächen 14 zweier benachbarter Kettenglieder 5, 6 der Oberkette 2 und zweier benachbarter, damit zusammenarbeitender Kettenglieder 15 und 17 der Unterkette 3 gebildet werden. Anders gesagt wird ein Prägeraum umfangsmäßig von vier Viertelumfangsflächen von vier verschiedenen Kettengliedern 5, 6, 15, 17 gebildet.

Die Kettenglieder 5 und 6 überdecken sich mit ihren Wangen 7 und 11. In den innenliegenden Wangen 7 der Kettenglieder 5 sind symmetrisch zu der Längsmittelebene 8 und axial fluchtend zwei Bohrungen 19 vorgesehen. Mit versetzter Achse besitzt jedes Kettenglied 5 an den innenliegenden Wangen 7 zwei weitere Bohrungen 20. In entsprechender Ausbildung sind auch die außenliegenden Wangen 11 der Kettenglieder 6 von insgesamt vier Bohrungen durchsetzt. Zwei Bohrungen 21 fluchten mit gemeinsamer Achse 22. Zwei weitere Bohrungen 23 sind mit zu der Achse 22 versetzter Achse 24 fluchtend zueinander vorgesehen (Fig. 3). Die Kettenglieder 5 und 6 werden abwechselnd zueinander in eine solche Relativlage gebracht, daß die Achse 22 der Bohrungen 21 mit der Achse der Bohrungen 19 in den innenliegenden Wangen 7 des Kettengliedes 5 fluchten. Eine gemeinsame durchgehende Welle 25 ist durch die Bohrungen 19 und 21 der Wangen 7, 11 der Kettenglieder 5 und 6 hindurchgeführt. Es ist eine zweite Welle 26 vorgesehen, die sich parallel zu der ersten Welle 25 erstreckt. Die Welle 26 ist durch die Bohrungen 20 und 23 der Kettenglieder 5 und 6 geführt. Die benachbarten Wellen 25 und 26 durchsetzen die Bohrungen 21 und 23 eines einzigen Kettengliedes 6 mit außenliegenden Wangen 11 und gleichzeitig die Bohrungen 19 und 20 zweier verschiedener Kettenglieder 5.

Die benachbarten Wellen 25 und 26 erstrecken sich nach beiden Seiten zu der vertikalen Längsmittelebene 8 nach außen. Auf der einen Seite der Längsmittelebene 8 ist ein Führungsgehäuse 27, auf der anderen Seite ein weiteres Führungsgehäuse 28 vorgesehen. Die Führungsgehäuse 27 und 28 besitzen etwa U-förmigen Querschnitt und weisen jeweils innenliegende Schenkel 29 und außenliegende Schenkel 30 auf. In den innenliegenden Schenkeln 29 befinden sich jeweils eine Bohrung 31 mit gemeinsam fluchtender Achse 32. Ähnlich wie an den Kettengliedern 5 und 6 weisen die innenliegenden Schenkel 29 jeweils eine weitere Bohrung 33 mit gemeinsamer Achse 34 auf. Auch die außenliegenden Schenkel 30 besitzen versetzt zueinander Bohrungen 35 und 36. Die Bohrungen 35 fluchten zu den Bohrungen 31. Die Bohrungen 36 fluchten zu den Bohrungen 33. Die Welle 25 durchsetzt die Bohrungen 19, 21, 31, 35. Die Welle 26 durchsetzt die Bohrungen 20, 23, 33, 36. Durch die beiden Wellen 25 und 26 sind die beiden Führungsgehäuse 27 und 28 fest und unbeweglich mit dem Kettenglied 6 verbunden, während lediglich die sich nach beiden Seiten anschließenden Kettenglieder 5 gegenüber der Welle 25 bzw. 26 schwenkbar vorgesehen sind. Jedes Kettenglied 6 der Prägekette 1 bzw. Oberkette 2 bildet mit zwei Führungsgehäusen 27 und 28 und zwei Wellen 25 und 26 eine feste Einheit, deren Teile zueinander nicht beweglich, insbesondere nicht schwenkbar sind. Das Zusammenfügen je eines Kettengliedes 6 zweier Wellen 25 und 26 und zweier Führungsgehäuse 27 und 28 zu einer festen, d. h. unbeweglichen Einheit kann auf verschiedene Weise erreicht werden, wie noch später dargelegt wird. Die feste Verbindung zwischen dem innenliegenden Schenkel 29 jedes Führungsgehäuses 27 bzw. 28 mit den außenliegenden Wangen 11 des betreffenden Kettengliedes 6 kann über je eine Schraube 55 gesichert sein. Die Schraube 55 durchsetzt den jeweiligen innenliegenden Schenkel 29 und greift in ein Gewinde 56 (Fig. 3) im außenliegenden Schenkel 11 des Kettengliedes 6 ein.

Das Führungsgehäuse 27 weist darüber hinaus im innenliegenden Schenkel 29 und im außenliegenden Schenkel 30 je eine Bohrung 37 auf. Die beiden Bohrungen 37 des Führungsgehäuses 27 fluchten miteinander. Die beiden Bohrungen 37 bilden eine Gleitführung für einen Prägestempel 38. Der Prägestempel 38 weist einen Schaft 39 und einen Prägekopf 40 auf, der zugleich das der Längsmittelebene 8 zugekehrte Ende des Prägestempels 38 bildet. An dem nach außen sich erstreckenden Ende des Schaftes 39 des Prägestempels 38 ist ein Gabelauge 41 vorgesehen, in welchem drehbar eine Rolle 42 gelagert ist. Achsparallel versetzt zu den Bohrungen 37 sind zwei weitere Bohrungen 43, ebenfalls mit fluchtender Achse an dem Führungsgehäuse 27 verwirklicht. Auch diese beiden Bohrungen 43 dienen zur gleitgeführten Lagerung eines weiteren Prägestempels 44. Damit sind parallel zueinander an bzw. in dem Führungsgehäuse 27 zwei Prägestempel 38 und 44 gelagert, die an sich gleich aufgebaut sind. Beide Prägestempel 38 und 44 weisen also jeweils einen Schaft, einen Prägekopf, ein Gabelauge und eine Rolle auf, wie dies anhand des Prägestempels 38 erläutert worden ist. In spiegelsymmetrischer Ausführung ist auch das Führungsgehäuse 28 gestaltet. Auch hier sind zwei weitere Prägestempel 45 und 46 vorgesehen bzw. verschieblich zu der vertikalen Längsmittelebene 8 gelagert.

In jedem Schaft 39 jedes Prägestempels 38, 44, 45, 46 ist je ein Querstift 47 verankert, der durch ein Langloch 48 nach außen hindurchragt und dort je eine Rolle 49 trägt. Die Rollen 49 arbeiten mit Führungsstangen 50 zusammen, die geneigt angeordnet sind. Die Rollen 49 mit den Querstiften 47 dienen zum Öffnen der Prägestempel 38, 44, 45, 46 während des Umlaufs der Prägekette 1. Umgekehrt arbeiten die Rollen 42 an den Prägestempeln 38, 44, 45, 46 im Sinne einer Schließbewegung der Prägeräume zusammen. Auch hier sind weitere Führungsschienen (nicht dargestellt) vorhanden, um die Schließbewegung je zweier miteinander zusammenarbeitender Prägestempel 38 und 45 bzw. 44 und 46 sicherzustellen. Es versteht sich, daß die Prägestempel 38, 44, 45, 46 in den jeweiligen Führungsgehäusen 27 und 28 beweglich angeordnet sind. Dieses Bewegungsspiel in den Bohrungen 37 bzw. 43 ist jedoch das einzige Spiel innerhalb der festen Einheit aus Kettenglied 6, den Wellen 25 und 26, den Führungsgehäusen 27 und 28 und den Prägestempeln 38, 44, 45, 46. Lediglich die andere Art Kettenglieder 5 mit den innenliegenden Wangen 7 sind gelenkig auf den Wellen gelagert. Ein erstes Kettenglied 5 ist dabei um die Welle 25 schwenkbar gelagert. Ein weiteres Kettenglied 5 ist dabei schwenkbar um die Welle 26 gelagert. Die beschriebene Ausführungsform kennzeichnet sich dadurch, daß an jedem Führungsgehäuse 27 zwei Prägestempel 38 und 44 verschiebbar gelagert bzw. zusammengefaßt sind, die zwei benachbarten Prägeräumen zugeordnet sind, wobei die beiden benachbarten Prägeräume von einem einzigen Kettenglied 6 mitgebildet werden. Entsprechendes gilt für das Führungsgehäuse 28 usw.. Die Anzahl der Führungsgehäuse stimmt mit der Anzahl der Kettenglieder überein. Die Erfindung ist aber auch anwendbar, wenn Führungsgehäuse vorgesehen sind, in denen nur jeweils ein Prägestempel gleitend verschiebbar gelagert ist.

Auf den Wellen 25 und 26 sind Rollhülsen 51 vorgesehen. Je eine Rollhülse befindet sich im Bereich je eines Führungsgehäuses 27 und 28. Eine weitere Rollhülse 51 ist zwischen den innenliegenden Wangen 7 jedes Kettengliedes 5 vorgesehen. Die Rollhülsen 51 arbeiten mit Anpreßleisten 52 zusammen, die in Fig. 1 lediglich angedeutet sind. Die Rollhülsen 51 können mit Hilfe von Distanzhülsen 53 axial festgelegt sein. Um die Kettenglieder 5 in den äußeren Bereichen der Führungsgehäuse 27 und 28 zu ergänzen, können Gelenklaschen 54 vorgesehen sein, die die Wellen 25 und 26 benachbarter Führungsgehäuse 27 auf der einen Seite und Führungsgehäuse 28 auf der anderen Seite miteinander verbinden.

Bei der neuen Prägekette wird die Anzahl der Gelenkstellen erheblich reduziert. Durch die Zusammenfügung je eines Kettengliedes 6 mit zwei Wellen 25 und 26 und zwei Führungsgehäusen 27 und 28 zu einer festen, in sich steifen Einheit wird eine verläßliche Basis für die Führung der Prägestempel 38, 44, 45, 46 geschaffen. Die Prägestempel werden mit ihren Prägeköpfen 40 genauer als bisher zueinander geführt, auch relativ zu den Viertelumfangsflächen 14 an den Kettengliedern 6 und 5. Die einzig noch beweglichen Stellen sind die Gleitführungen der Prägestempel in den Führungsgehäusen und die Gelenkverbindung der Kettenglieder 5 an den Wellen 25 und 26. Damit ist auch der Verschleiß reduziert. Die Prägekette 1 erhält eine vorteilhaft vergrößerte Lebens- und Einsatzdauer. Die mit der Prägekette 1 ausgestattete Prägemaschine erhält damit eine höhere Leistung, weil die Geschwindigkeit des Antriebes der Prägekette 1 gesteigert werden kann.

Fig. 2 läßt erkennen, daß die beiden Führungsgehäuse 27 und 28, die einem gemeinsamen Kettenglied 6 mit außenliegenden Wangen 11 zugeordnet sind, durch zwei Wellen 25 und 26 zu einer in sich festen Einheit verbunden sind, bei der die einzelnen Bestandteile gegeneinander nicht mehr bewegt, insbesondere nicht verschwenkt werden können. In dem Führungsgehäuse 27 sind zwei Prägestempel 38 und 44 verschieblich gelagert. In dem Führungsgehäuse 28 sind zwei Prägestempel 45 und 46 verschieblich gelagert. Die Prägestempel 38 und 45 begrenzen in Verbindung mit Viertelumfangsflächen 14 benachbarter Kettenglieder 6 und 5 der Oberkette 2 sowie 15, 17 der Unterkette 3 einen Prägeraum, in welchem ein Bonbon ausgeformt wird.

Fig. 3 zeigt eine Seitenansicht auf ein Kettenglied 6 mit außenliegenden Wangen 11 sowie eines der beiden sich jeweils rechts und links anschließenden Kettenglieder 5 mit innenliegenden Wangen 7. Symmetrisch zu der Horizontalebene 4 erstrecken sich die Kettenglieder 15 und 17 der Unterkette 3 (nicht dargestellt). In der Schließposition der Prägekammern berühren sich die Schneidkanten der Kettenglieder der Oberkette und der Unterkette.

Zur Herstellung bzw. Montage fester Einheiten mit gegeneinander unbeweglichen Teilen gibt es verschiedene Möglichkeiten, die dem Fachmann zur Verfügung stehen. So gibt es die Möglichkeit, verschiedene Teile aus einem Materialstück zu fertigen, beispielsweise die Kettenglieder 6 und die Führungsgehäuse 27 und 28. Die Möglichkeit einer einstückigen Herstellung wird in der Regel durch die Montierbarkeit bzw. Demontierbarkeit der Oberkette begrenzt. Auch kann es erforderlich sein, die Oberkette 2 öffnen zu können. Ein besonders sinnvoller Aufbau der festen Einheit aus Kettenglied 6, zugehörigen Wellen 25 und 26 sowie zugehörigen Führungsgehäusen 27 und 28 wird anhand von Fig. 4 verdeutlicht. In Fig. 4 ist in durchgezogener Linienführung die Seitenansicht des Kettengliedes 6 mit den außenliegenden Wangen 11 wiedergegeben, wie es an sich mit Fig. 3 übereinstimmt. Relativ zu diesem Kettenglied 6 ist in gestrichelter Linienführung das Führungsgehäuse 27 angedeutet. Die außenliegende Wange 11 weist die Bohrung 21 mit ihrer Achse 22 und die Bohrung 23 mit ihrer Achse 24 auf. Im innenliegenden Schenkel 29 des Führungsgehäuses 27 sind dagegen die Bohrung 31 mit ihrer Achse 32 und die Bohrung 33 mit ihrer Achse 34 vorgesehen. Die Achse 32 ist gegenüber der Achse 22 um ein geringes Maß nach der einen Seite versetzt. Die Achse 24 ist gegenüber der Achse 34 um ein geringes Maß nach der anderen Seite versetzt (übertrieben dargestellt). Wenn nun die beiden Wellen 25 und 26 von der Seite her eingeschoben werden, tritt eine gegenseitige Verspannung im Bereich der Bohrungen und damit eine Verspannung des Führungsgehäuses 27 relativ zu dem Kettenglied 6 ein. Entsprechendes gilt für das Führungsgehäuse 28 auf der anderen Seite der Längsmittelebene 8. Die natürliche Biegsamkeit der Wellen 25 und 26 ermöglicht den Zusammenbau, so daß das anfängliche Einschieben der Wellen 25 und 26 relativ leicht durchgeführt werden kann.

Gegen Ende der Einschiebebewegung, bei der sich letztlich dann der Reibschluß erhöht und der innenliegende Schenkel 29 schließlich Kontakt zu der außenliegenden Wange 11 erhält, ist die Aufwendung einer erheblichen Kraft erforderlich. Hier kann die Schraube 55 sinnvoll genutzt werden, um diese Kraft beim Einschrauben in das Gewinde 56 bereitzustellen. Es versteht sich, daß die beiden Führungsgehäuse 27 und 28 von unterschiedlichen Seiten her auf die Wellen 25 und 26 aufgeschoben werden, damit die schwenkbewegliche Drehverbindung zwischen den Wellen 25 und 26 und den jeweils anschließenden Kettengliedern 5 nicht beschädigt wird.

### BEZUGSZEICHENLISTE

- 1 -: Prägekette
- 2 -: Oberkette
- 3 -: Unterkette
- 4 -: Horizontalebene
- 5 -: Kettenglied
- 6 -: Kettenglied
- 7 -: innenliegende Wange
- 8 -: Längsmittelebene
- 9 -: Steg
- 10 -: Schneidkante

- 11 -: außenliegende Wange
- 12 -: Steg
- 13 -: Schneidkante
- 14 -: Viertelumfangsfläche
- 15 -: Kettenglied
- 16 -: innenliegende Wange
- 17 -: Kettenglied
- 18 -: außenliegende Wange
- 19 -: Bohrung
- 20 -: Bohrung

- 21 -: Bohrung
- 22 -: Achse
- 23 -: Bohrung
- 24 -: Achse
- 25 -: Welle
- 26 -: Welle
- 27 -: Führungsgehäuse
- 28 -: Führungsgehäuse
- 29 -: innenliegender Schenkel
- 30 -: außenliegender Schenkel

- 31 -: Bohrung
- 32 -: Achse
- 33 -: Bohrung
- 34 -: Achse
- 35 -: Bohrung
- 36 -: Bohrung
- 37 -: Bohrung
- 38 -: Prägestempel
- 39 -: Schaft
- 40 -: Prägekopf

- 41 -: Gabelauge
- 42 -: Rolle
- 43 -: Bohrung
- 44 -: Prägestempel
- 45 -: Prägestempel
- 46 -: Prägestempel
- 47 -: Querstift
- 48 -: Langloch
- 49 -: Rolle
- 50 -: Führungsstange

- 51 -: Rollhülse
- 52 -: Anpreßleiste
- 53 -: Distanzhülse
- 54 -: Gelenklasche
- 55 -: Schraube
- 56 -: Gewinde

## Patentansprüche

1. Prägekette (1) zur Herstellung von Bonbons, mit einer Anzahl Kettenglieder (5, 6), die abwechselnd innen- und außenliegende Wangen (7, 11) aufweisen und jeweils eine Schneidkante (10, 13) besitzen, mit einer Anzahl Führungsgehäusen (27, 28) rechts und links einer gemeinsamen Längsmittelebene (8) der Prägekette (1), die jeweils mindestens einen Prägestempel (38, 45) tragen, und mit Wellen (25), die die Kettenglieder (5, 6) untereinander und mit den Führungsgehäusen (27, 28) verbinden, **dadurch gekennzeichnet, daß** zumindest jedes zweite Kettenglied (6) und eine zugehörige Welle (25) sowie ein zugehöriges Führungsgehäuse (27) zu einer spielfreien und in sich festen Einheit verbunden sind.

2. Prägekette nach Anspruch 1, **dadurch gekennzeichnet, daß** die beiden Führungsgehäuse (27, 28) rechts und links der gemeinsamen Längsmittelebene (8) der Kettenglieder über die zugehörige Welle (25) fest miteinander verbunden sind.

3. Prägekette nach Anspruch 1 oder 2, **dadurch gekennzeichnet, daß** jedes zweite Kettenglied (6) mit zwei zugehörigen Wellen (25, 26) und einem gemeinsamen, zwei Prägestempel (38, 44; 45, 46) tragenden Führungsgehäuse (27; 28) zu einer spielfreien und in sich festen Einheit verbunden sind.

4. Prägekette nach Anspruch 3, **dadurch gekennzeichnet, daß** das Kettenglied (6), die Wellen (25, 26) und das Führungsgehäuse (27, 28) unter Anwendung von Preßpassungen zu der unbeweglichen, aber lösbaren Einheit verbunden sind.

5. Prägekette nach Anspruch 3 und 4, **dadurch gekennzeichnet, daß** das Führungsgehäuse (27, 28) einerseits und das Kettenglied (6) andererseits auf beiden Seiten rechts und links der gemeinsamen Längsmittelebene (8) je zwei von zwei benachbarten Wellen (25, 26) durchsetzte Bohrungen (31, 35, 33, 36; 21, 23;) aufweisen, wobei auf jeder Seite rechts und links die Achsen (22, 24) der beiden Bohrungen (21, 23) in dem Kettenglied (6) zu den Achsen (32, 34) der beiden Bohrungen (31, 33) in dem Führungsgehäuse (27) gegeneinander so versetzt angeordnet sind, daß beim Zusammenbau der Einheit Reibschluß entsteht.

6. Prägekette nach Anspruch 5, **dadurch gekennzeichnet, daß** das Führungsgehäuse (27, 28) einerseits und das Kettenglied (6) andererseits auf beiden Seiten rechts und links der gemeinsamen Längsmittelebene (8) je mit einer zusätzlichen Schraube (55) verbunden sind.

7. Prägekette nach den Ansprüchen 3 bis 6, **dadurch gekennzeichnet, daß** nur die Kettenglieder (6) mit den außenliegenden Wangen (11) mit dem Führungsgehäuse (27, 28) und den beiden Wellen (25, 26) zu der festen Einheit verbunden sind.

8. Prägekette nach einem der Ansprüche 1 bis 7, **dadurch gekennzeichnet, daß** die innenliegenden Wangen (7) der einen Art Kettenglieder (5) breiter als die außenliegenden Wangen (11) der anderen Art Kettenglieder (6) ausgebildet sind.

9. Prägekette nach einem der Ansprüche 1 bis 8, **dadurch gekennzeichnet, daß** die eine Art Kettenglieder (5) mit den innenliegenden Wangen (7) mit zwei benachbarten Wellen (25, 26) jeweils gelenkig verbunden sind.

10. Prägekette naqch Anspruch 9, **dadurch gekennzeichnet, daß** die zwei benachbarten Wellen (25, 26) zusätzlich zu ihrer gelenkigen Verbindung über die eine Art Kettenglieder (5) mit den innenliegenden Wangen (7) über Gelenklaschen (54) verbunden sind, die parallel zu den Kettenglieder (5) mit den innenliegenden Wangen (7) vorgesehen und in den äußeren Bereichen der Führungsgehäuse (27, 28) angeordnet sind.

## Claims

1. A chain die assembly (1) for producing candy, comprising a plurality of chain links (5, 6) each including alternatively arranged inner and outer cheeks (7, 11) and each including a cutting edge (10, 13), comprising a plurality of guiding housings (27, 28) being arranged right and left of a longitudinal centre plane (8) of the chain die assembly (1) and each carrying at least one die (38, 45), and comprising a plurality of shafts (25) each connecting the chain links (5, 6) to one another and to the guiding housings (27, 28), **characterized in that** at least each second chain link (6) together with an associated shaft (25) and an associated guiding housing (27) is connected to form a fixed unit to be free from backlash.

2. Assembly of claim 1, **characterized in that** the two guiding housings (27, 28) arranged right and left of a longitudinal centre plane (8) of the chain links are fixedly connected to each other by the associated shaft (25).

3. Assembly of claim 1 or 2, **characterized in that** each of the second chain links (6) together with two associated shafts (25, 26) and a common guiding housing (27; 28) carrying two dies (38, 44; 45, 46) is connected to form a fixed unit being free from backlash.

4. The assembly of claim 3, **characterized in that** the fixed unit including the chain link (6), the shafts (25, 26) and the guiding housing (27, 28) is realized by interference fits to be unmovable but detachable.

5. Assembly of claim 3 or 4, **characterized in that** the guiding housing (27, 28) and the chain link (6) each include bores (31, 35, 33, 36; 21, 23) each being located on both sides right and left of the common longitudinal centre plane (8), wherein two adjacent shafts (25, 26) each extend through the bores, wherein at each side right and left of the common longitudinal centre plane the axes (22, 24) of both of the bores (21, 23) being located in the chain link (6) are offset with respect to the axes (32, 34) of both of the bores (31, 33) being located in the guiding housing (27) in a way that frictional engagement is realized in the mounted position.

6. Assembly of claim 5, **characterized in that** the guiding housing (27, 28) and the chain link (6) at both sides of the common longitudinal centre plane (8) are each connected by an additional screw (55).

7. Assembly of the claims 3 to 6, **characterized in that** only the second chain links (6) having the outer cheeks (11) are connected to the guiding housing (27, 28) and to the two shafts (25, 26) to form the fixed unit.

8. Assembly of one of the claims 1 to 7, **characterized in that** the inner cheeks (7) of the first chain links (5) being wider than the cheeks (11) of the second chain links (6).

9. Assembly of one of the claims 1 to 8, **characterized in that** the first chain links (5) having the inner cheeks (7) each are rotatably connected to two adjacent shafts (25, 26).

10. Assembly of claim 9, **characterized in that** the two adjacent shafts (25, 26) in addition to the rotatable connection are interconnected by the first chain links (5) having the inner cheeks (7) and by joint bars (54) being arranged parallel to the first chain links (5) having the inner cheeks (7) and being arranged in the outer region of the guiding houses (27, 28).

## Revendications

1. Chaîne d'estampage (1) pour produire des bonbons, avec un nombre de maillons (5, 6) qui comportent des joues (7, 11) situées alternativement à l'intérieur et à l'extérieur et possèdent chacun un bord de coupe (10, 13), avec un nombre de boîtiers de guidage (27, 28) à droite et à gauche d'un plan médian longitudinal (8) commun d'estampage (1), qui portent chacun au moins un poinçon d'estampage (38, 45), et avec des arbres (25) qui relient les maillons (5, 6) de la chaîne entre eux et aux boîtiers de guidage (27, 28), **caractérisée en ce qu'**au moins un maillon (6) sur deux de la chaîne et un arbre (25) correspondant ainsi qu'un boîtier de guidage (27) correspondant sont réunis en une unité sans jeu et rigide.

2. Chaîne d'estampage selon la revendication 1, **caractérisée en ce que** les deux boîtiers de guidage (27, 28) sont reliés de manière fixe entre eux à droite et à gauche du plan médian longitudinal (8) des maillons de la chaîne, par l'arbre (25) correspondant.

3. Chaîne à découper selon la revendication 1 ou 2, **caractérisée en ce qu'**un maillon (6) sur deux de la chaîne est relié à deux arbres (25, 26) correspondants et à un boîtier de guidage (27; 28) commun portant deux poinçons à découper (38, 44; 45, 46), pour former une unité sans jeu et rigide.

4. Chaîne d'estampage selon la revendication 3, **caractérisée en ce que** le maillon (6) de la chaîne, les arbres (25, 26) et le boîtier de guidage (27, 28) sont reliés, par utilisation d'ajustements pressés, pour constituer l'unité non mobile, mais séparable.

5. Chaîne d'estampage selon les revendications 3 et 4, **caractérisée en ce que** le boîtier de guidage (27, 28) d'une part et le maillon (6) de la chaîne d'autre part présentent chacun, des deux côtés, à droite et à gauche du plan médian longitudinal (8) commun, deux perçages (31, 35, 33, 36; 21, 23) traversés par deux arbres (25, 26) voisins, sur chaque côté, à droite et à gauche, les axes (22, 24) des deux perçages (21, 23) étant disposés dans le maillon (6) de la chaîne, décalés l'un par rapport à l'autre dans le boîtier de guidage (27), par rapport aux axes (32, 34) des deux perçages (31, 33), de manière qu'il se produise une liaison par friction à l'assemblage de l'unité.

6. Chaîne d'estampage selon la revendication 5, **caractérisée en ce que** le boîtier de guidage (27, 28) d'une part et le maillon (6) de la chaîne d'autre part sont reliés des deux côtés, à droite et à gauche du plan médian longitudinal unique commun, chacun à une vis (55) supplémentaire.

7. Chaîne d'estampage selon les revendications 3 à 6, **caractérisée en ce que** seuls les maillons (6) de la chaîne présentant les joues (11) situées à l'extérieur sont reliés au boîtier de guidage (27, 28) et aux deux arbres (25, 26), pour former l'unité rigide.

8. Chaîne d'estampage selon l'une des revendications 1 à 7, **caractérisée en ce que** les joues (7) situées à l'intérieur, d'un type de maillon (5) de la chaîne, sont plus larges que les joues (11) situées à l'extérieur de l'autre type de maillon (6) de la chaîne.

9. Chaîne d'estampage selon l'une des revendications 1 à 8, **caractérisée en ce que** les maillons (5) d'un type de la chaîne avec les joues (7) situées à l'intérieur sont reliés chacun de manière articulée à deux arbres (25, 26) voisins.

10. Chaîne d'estampage selon la revendication 9, **caractérisée en ce que** les deux arbres (25, 26) voisins sont reliés, en plus de leur liaison articulée par un type de maillon (5) de la chaîne avec les joues (7) situées à l'intérieur, par des pattes d'articulation (54) qui sont prévues parallèlement aux maillons (5) de la chaîne avec les joues (7) situées à l'intérieur, et disposées dans les zones extérieures des boîtiers de guidage (27, 28).
